(19) Europäisches Patentamt / European Patent Office / Office européen des brevets

(11) **EP 3 562 015 A1**

(12) **EUROPEAN PATENT APPLICATION**

(43) Date of publication:
**30.10.2019  Bulletin 2019/44**

(51) Int Cl.:
**H02M 1/14** (2006.01)     **H02J 3/01** (2006.01)
**H02J 3/38** (2006.01)     **H02J 3/00** (2006.01)

(21) Application number: **18191894.7**

(22) Date of filing: **31.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2018  CN 201810374294**

(71) Applicant: **Beijing Apollo Ding Rong Solar Technology Co., Ltd.**
**Beijing 100176 (CN)**

(72) Inventors:
• **Wei, Li**
  **Beijing, 100176 (CN)**
• **Wenhua, Chen**
  **Beijing, 100176 (CN)**

(74) Representative: **Rupprecht, Kay**
**Meissner Bolte Patentanwälte**
**Rechtsanwälte Partnerschaft mbB**
**Widenmayerstraße 47**
**80538 München (DE)**

(54) **PHOTOVOLTAIC POWER GENERATION SYSTEM AND METHOD AND DEVICE FOR SUPPRESSING HARMONIC WAVE**

(57) The present invention provides a photovoltaic power generation system and a method and a device for suppressing a harmonic wave. The harmonic suppression system includes: a photovoltaic system, an alternating current grid, and a tuning capacitor, wherein the photovoltaic system includes a photovoltaic panel and an inverter, and the inverter is configured to convert a direct current generated by the photovoltaic panel into an alternating current; and the photovoltaic system is connected to the alternating current grid, and the tuning capacitor is connected to a grid connection port of the photovoltaic system. In the technical solution, a tuning capacitor is connected to the grid connection port of the photovoltaic system, to change the original resonant frequency of the photovoltaic system, so that the resonant frequency of the grid is shifted from the harmonic frequency generated by the inverter, thereby suppressing the harmonic resonance introduced by the inverter.

Fig. 3

## Description

## TECHNICAL FIELD

The present invention relates to the field of photovoltaic power generation technology, and in particular to a photovoltaic power generation system and a method and a device for suppressing a harmonic wave.

## BACKGROUND

In the photovoltaic power generation system, when the photovoltaic panel receives light for power generation, it generates a direct current. The direct current cannot be directly fed to the grid, but can be fed to the grid after being converted into an alternating current by an inverter.

The inverter converts the direct current generated by the photovoltaic panel into a grid-acceptable alternating current through a semiconductor device, and the alternating current is fed into the power grid through a switch cabinet.

During the DC-to-AC (inverter) process, the semiconductor device inside the inverter performs a switching action. By controlling the turning on and turning off of the semiconductor device, the DC ripple is converted into a Pulse Width Modulation (PWM) wave. Through the power filter circuit that is followed, the PWM wave is adjusted to an AC waveform with a grid- acceptable power frequency.

Since the fast switching of the semiconductor and the resonant frequency of the post-stage filter circuit interact with each other during the inverter process, waveforms of other frequencies (harmonic waves) are superimposed on the output AC waveform.

Parasitic inductance and capacitance are normally contained in the circuit of the photovoltaic generation system. The inductance and capacitance interact with the load in the circuit and the leakage inductance of the transformer to form a resonant frequency point. When the harmonic frequencies introduced by the inverter are approximate, it is easy to generate a harmonic resonance, which will greatly increase the amplitude of the original harmonic wave. It adversely affects the stable operation of the devices on the line and even causes damage.

## SUMMARY

Embodiments of the present invention provide a photovoltaic power generation system, and a method and a device for suppressing a harmonic wave, and the technical solutions are as follows.

According to a first aspect of embodiments of the present invention, there is provided a photovoltaic power generation system, including: a photovoltaic system, an alternating current grid and a tuning capacitor, wherein the photovoltaic system includes a photovoltaic panel and an inverter, and the inverter is configured to convert a direct current generated by the photovoltaic panel into an alternating current; and

the photovoltaic system is connected to the alternating current grid, and the tuning capacitor is connected to a grid connection port of the photovoltaic system.

In an embodiment, the photovoltaic power generation system further includes a bleeder resistor, wherein the bleeder resistor is connected across the tuning capacitor.

In an embodiment, the photovoltaic power generation system further includes a control switch, wherein the control switch is connected between the tuning capacitor and a grid connection port of the photovoltaic system.

In an embodiment, the photovoltaic system outputs a three-phase alternating current, a number of the tuning capacitors is three, one tuning capacitor is connected between any two phases, and the three tuning capacitors are connected in a star configuration or in a triangle configuration.

According to a second aspect of the embodiments of the present invention, there is provided a method for suppressing a harmonic wave, applied in a photovoltaic power generation system, the photovoltaic power generation system including a photovoltaic system and an alternating current grid, the photovoltaic system including a photovoltaic panel and an inverter, the inverter being configured to convert a direct current generated by the photovoltaic panel into an alternating current, wherein the method includes:

determining a design value of a resonant frequency of the photovoltaic power generation system according to a switching frequency of the inverter, a difference between the design value and the switching frequency of the inverter being not less than a preset threshold;

determining a capacitance of a tuning capacitor according to the design value, wherein the tuning capacitor causes the resonant frequency of the photovoltaic power generation system to reach the design value; and

connecting the tuning capacitor to a grid connection port of the photovoltaic system according to the determined capacitance.

In an embodiment, determining a capacitance of a tuning capacitor according to the design value includes:
determining the capacitance of the tuning capacitor according to the design value and a circuit inductance of the photovoltaic power generation system.

In an embodiment, the method for suppressing a harmonic wave further includes:

determining a circuit inductance impedance of the photovoltaic power generation system; and

calculating the circuit inductance of the photovoltaic power generation system according to the circuit inductance impedance of the photovoltaic power generation system.

In an embodiment, determining a circuit inductance impedance of the photovoltaic power generation system includes:

determining a leakage inductance impedance of a transformer in a circuit of the photovoltaic power generation system; and

estimating the circuit inductance impedance of the photovoltaic power generation system according to the leakage inductance impedance of the transformer.

In an embodiment, the method for suppressing a harmonic wave further includes:

calculating a sum of reactive currents generated by the power frequency voltage and the harmonic voltage on the tuning capacitor; and

determining a rated current of the tuning capacitor according to the sum of the reactive currents, the rated current being greater than the sum of the reactive currents.

In an embodiment, the method for suppressing a harmonic wave further includes:
determining a rated voltage of the tuning capacitor according to a line voltage and a phase voltage of the photovoltaic system, the rated voltage being greater than a larger value of the line voltage and the phase voltage of the photovoltaic system.

According to a third aspect of the embodiments of the present invention, there is provided a device for suppressing a harmonic wave, applied in a photovoltaic power generation system, the photovoltaic power generation system including a photovoltaic system and an alternating current grid, the photovoltaic system including a photovoltaic panel and an inverter, the inverter being configured to convert a direct current generated by the photovoltaic panel into an alternating current, wherein the device includes:

a margin setting module configured to determine a design value of a resonant frequency of the photovoltaic power generation system according to a switching frequency of the inverter, a difference between the design value and the switching frequency of the inverter being not less than a preset threshold;

a capacitance selection module configured to determine a capacitance of a tuning capacitor according to the design value, wherein the tuning capacitor causes the resonant frequency of the photovoltaic power generation system to reach the design value; and

a connection control module configured to connect the tuning capacitor to a grid connection port of the photovoltaic system according to the determined capacitance.

In an embodiment, the capacitance selection module includes:
a capacitance calculation sub-module configured to determine the capacitance of the tuning capacitor according to the design value and a circuit inductance of the photovoltaic power generation system.

In an embodiment, the capacitance selection module includes:

an inductive-impedance calculation sub-module configured to determine a circuit inductance impedance of the photovoltaic power generation system; and

an inductance calculation sub-module configured to calculate the circuit inductance of the photovoltaic power generation system according to the circuit inductance impedance of the photovoltaic power generation system.

In an embodiment, the capacitance selection module includes:

a leakage inductance calculation sub-module configured to determine a leakage inductance impedance of a transformer in a circuit of the photovoltaic power generation system; and

an inductance-impedance estimation sub-module configured to estimate the circuit inductance impedance of the photovoltaic power generation system according to the leakage inductance impedance of the transformer.

In an embodiment, the device further includes:

a reactive current calculation module configured to calculate a sum of reactive currents generated by the power frequency voltage and the harmonic voltage on the tuning capacitor; and

a rated current selection module configured to determine a rated current of the tuning capacitor according to the sum of the reactive currents, the rated current being greater than the sum of the reactive currents.

In an embodiment, the device further includes: a rated voltage selection module configured to determine a rated voltage of the tuning capacitor according to a line voltage and a phase voltage of the photovoltaic system, the rated voltage being greater than a larger value of the line voltage and the phase voltage of the photovoltaic system.

According to a fourth aspect of an embodiment of the present invention, there is provided a device for suppressing a harmonic wave, including:

a processor; and

a memory for storing instructions executable by the processor,

wherein the processor is configured to:

determine a capacitance of a tuning capacitor that causes a resonant frequency of a photovoltaic power generation system to reach a design value, the photovoltaic power generation system including a photovoltaic system and an alternating current grid, the photovoltaic system including a photovoltaic panel and an inverter, the inverter being configured to convert a direct current generated by the photovoltaic panel into an alternating current, and a difference between the design value and a switching frequency of the inverter of the photovoltaic system being not less than a preset threshold; and

connect the photovoltaic system to the alternating current grid, and connecting the tuning capacitor to a grid connection port of the photovoltaic system according to the determined capacitance.

According to a fifth aspect of the embodiments of the present invention, there is provided a computer readable storage medium having stored thereon computer instructions, wherein the instructions are executed by a processor to implement the steps of the method for suppressing a harmonic wave provided by the second aspect.

In the photovoltaic power generation system, the method and the device for suppressing a harmonic wave, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system. The method disclosed above is simple, the device can be installed and maintained easily, and the cost is low.

It should be understood that both the foregoing general description and the following detailed description are exemplary and explanatory only and are not restrictive of the invention.

## BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.

Fig. 1 is a schematic structural diagram of a photovoltaic power generation system according to an exemplary embodiment.

Fig. 2 is a schematic structural diagram of another photovoltaic power generation system according to an exemplary embodiment.

Fig. 3 is a schematic structural diagram of still another photovoltaic power generation system according to an exemplary embodiment.

Fig. 4 is a flow chart of a method for suppressing a harmonic wave according to an exemplary embodiment.

Fig. 5 is a flow chart of another method for suppressing a harmonic wave, according to an exemplary embodiment.

Fig. 6 is a voltage spectrum profile graph measured at a grid connection port of a photovoltaic system, according to an exemplary embodiment.

Fig. 7 is a voltage spectral profile graph measured at a grid connection port of another volt system, according to an exemplary embodiment.

Fig. 8 is a block diagram of an electronic device according to an exemplary embodiment.

Fig. 9 is a block diagram of an electronic device according to an exemplary embodiment.

Fig. 10 is a block diagram of an electronic device according to an exemplary embodiment.

Fig. 11 is a block diagram of an electronic device according to an exemplary embodiment.

Fig. 12 is a block diagram of an electronic device according to an exemplary embodiment.

Fig. 13 is a block diagram of an electronic device according to an exemplary embodiment.

Fig. 14 is a block diagram of an electronic device according to an exemplary embodiment.

DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

When the resonant frequency of the photovoltaic system is approximate to the harmonic frequency introduced by the inverter, harmonic resonance is easily generated, which adversely affects the stable operation of the device on the line and even causes damage.

The technical solution of the present invention changes the original resonant frequency of the photovoltaic system by connecting a tuning capacitor to the grid connection port of the photovoltaic system, to suppress the harmonic resonance introduced by the inverter.

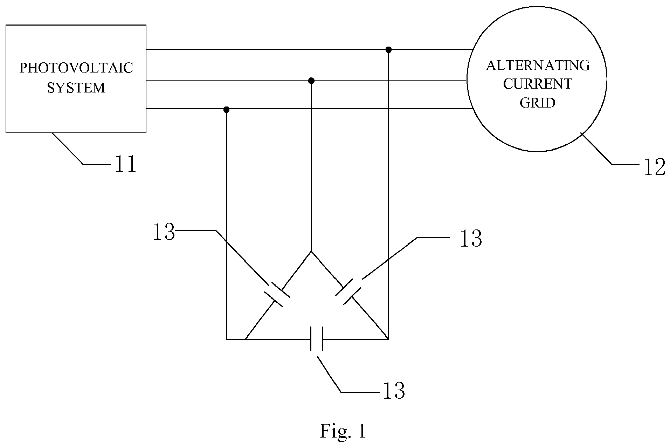

Fig. 1 is a schematic structural diagram of a photovoltaic power generation system according to an exemplary embodiment. The photovoltaic power generation system includes: a photovoltaic system 11, an alternating current grid 12, and a tuning capacitor 13.

The photovoltaic system 11 includes a photovoltaic panel, and an inverter for converting a direct current generated by the photovoltaic panel into an alternating current.

The photovoltaic system 11 is connected to an alternating current grid 12, and the alternating current output by the photovoltaic system 11 is fed into the alternating current grid 12. The tuning capacitor 13 is connected to the grid connection port of the photovoltaic system 11.

In one embodiment, the photovoltaic system 11 outputs a three-phase alternating current. The number of the tuning capacitors 13 is three. One tuning capacitor 13 is connected between any two phases, and three tuning capacitors 13 are connected in a star configuration or in a triangle configuration. Fig. 1 shows the case where three tuning capacitors 13 are connected in the star configuration.

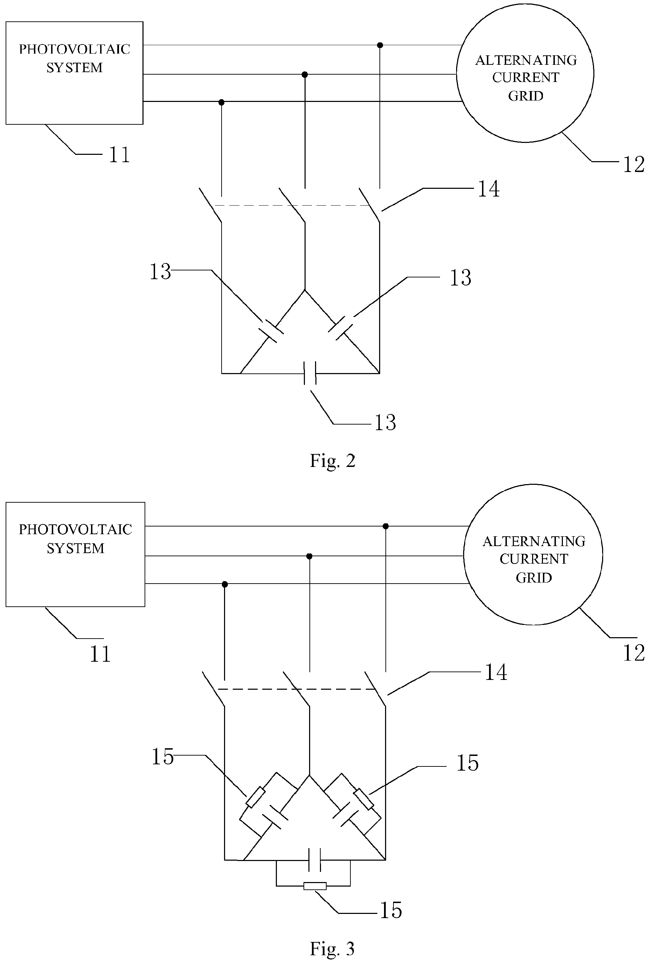

Referring to Fig. 2, in one embodiment, the photovoltaic power generation system further includes a control switch 14. The control switch 14 is connected between the tuning capacitor 13 and the grid connection port of the photovoltaic system 11. The control switch 14 may be a micro-break switch, which may control the switching of the tuning capacitor 13 to facilitate field testing and may provide an overcurrent protection for the tuning capacitor 13.

Referring to Fig. 3, in one embodiment, the photovoltaic power generation system further includes a bleeder resistor 15. The bleeder resistor 15 is connected across the tuning capacitor 13. The bleeder resistor 15 allows the tuning capacitor 13 to quickly discharge the stored energy after the power is turned off, and increases the damping coefficient of the system, thereby increasing the stability of the photovoltaic system 11.

In the technical solution provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

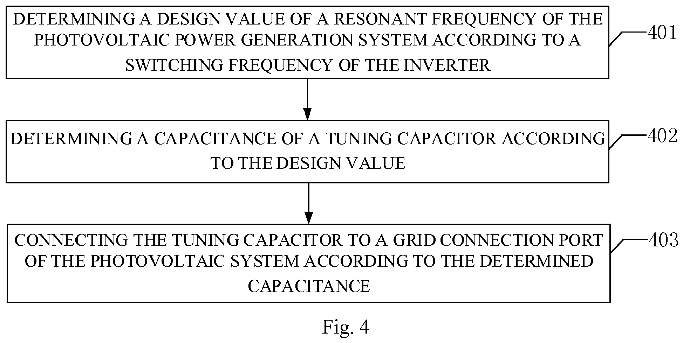

Fig. 4 is a flow chart of a method for suppressing a harmonic wave according to an exemplary embodiment, which is applied in a photovoltaic power generation system including a photovoltaic system and an alternating current grid, the photovoltaic system including a photovoltaic panel and an inverter, and the inverter is used to convert the direct current generated by the photovoltaic panel into alternating current.

The method for suppressing a harmonic wave includes steps 401-403.

In step 401, a design value of the resonant frequency of the photovoltaic power generation system is determined according to a switching frequency of the inverter.

A difference between the design value and a switching frequency of the inverter of the photovoltaic system is not less than a preset threshold. For example, the switching frequency of the inverter is 2.7 KHz, the preset threshold is 1.5 KHz, and (2.7 KHz - the design value) $\geq$ 1.5 KHz, then the design value is $\leq$ 1.2 KHz.

In step 402, the capacitance of the tuning capacitor is determined based on the design value.

The tuning capacitor allows the resonant frequency of the photovoltaic system to reach a design value.

In one embodiment, according to Equation 1:

$$f_0 = \frac{1}{2\pi\sqrt{LC}}$$

The capacitance of the tuning capacitor is calculated. In Equation 1, $f_0$ is the design value of the resonant frequency, $L$ is the circuit inductance of the photovoltaic power generation system, and $C$ is the capacitance of the tuning capacitor.

In step 403, the tuning capacitor is connected to the grid connection port of the photovoltaic system according to the determined capacitance.

Referring to the schematic diagram of the photovoltaic power generation system shown in Fig. 1, the photovoltaic system is connected to the AC power grid, and the tuning capacitor is connected to the grid connection port of the photovoltaic system. The port is usually a 400V port at the grid connection end. The capacitance of the tuning capacitor is the capacitance determined in step 402.

In the method for suppressing a harmonic wave provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

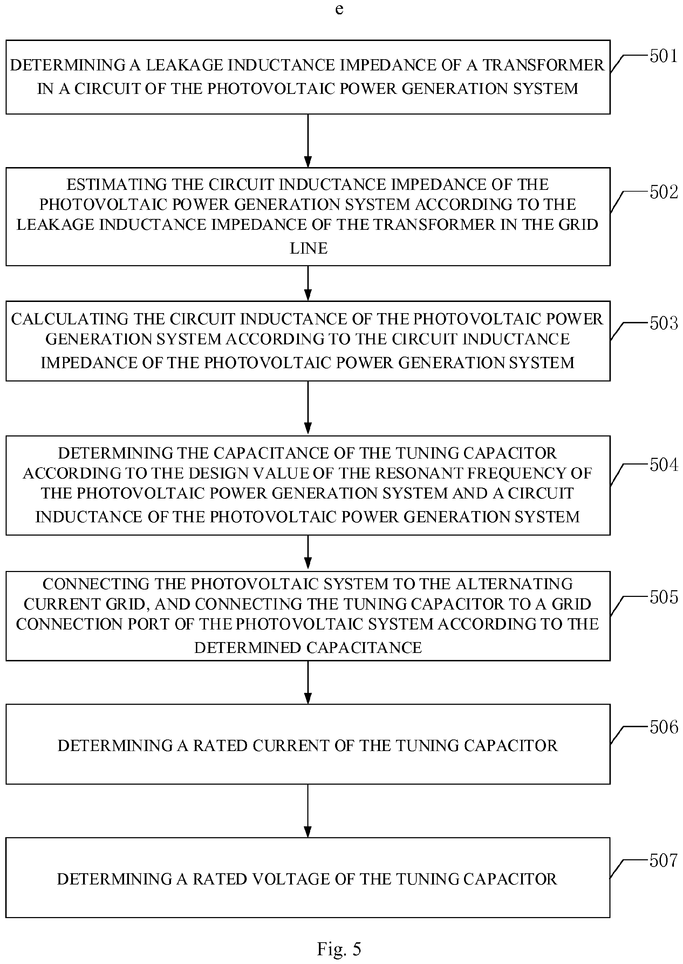

Fig. 5 is a flowchart of a method for suppressing a harmonic wave according to an exemplary embodiment of the present invention based on the method for suppressing a harmonic wave according to the embodiment corresponding to the above Fig. 4. The calculation process has been further detailed and explained in the embodiment corresponding to Fig. 5. The contents of some of the steps are the same as or similar to those of the embodiment corresponding to Fig. 4, and only the differences in the steps will be described in detail below. Referring to Fig. 5, the method for suppressing a harmonic wave provided in this embodiment includes steps 501-507.

In step 501, a leakage inductance impedance of a transformer in a photovoltaic power generation system circuit is determined.

The photovoltaic power system circuit refers to the circuit formed by the photovoltaic system and the AC grid connected to each other. The parameters in a system of a project may be taken as an example: the power of the transformer is 52 kVA; the primary side is 400V connected in a triangle configuration; and the secondary side is 400V connected in a star configuration; the configuration is Dy/n11; the rated current at the 400V side is 75A; and the short circuit impedance is 6%. According to the parameters, the leakage inductance impedance of the transformer is calculated as:

$$Z_l = \frac{U_o \times 6\%}{I_o \times \sqrt{3}} = 106m\Omega$$

Where, $Z_l$ is the leakage inductance impedance of the transformer, $U_o$ is the secondary voltage of the transformer, and $I_o$ is the rated current of the secondary side of the transformer.

In step 502, a circuit inductance impedance of the photovoltaic power generation system is estimated based on the leakage inductance impedance of the transformer in the grid line.

The copper loss of the transformer is much smaller than the iron loss and may be ignored. The circuit inductance of the photovoltaic power generation system includes the leakage inductance of the transformer in the circuit, the parasitic inductance of the line, and the parasitic inductance of the component. The circuit inductance impedance may be estimated from the leakage inductance impedance of the transformer in the line.

In one embodiment, the leakage inductance impedance of the transformer is multiplied by a predetermined coefficient value to obtain an estimate of the circuit inductance impedance of the photovoltaic power generation system. Wherein, the predetermined coefficient value is greater than 1. Taking the case where the coefficient value is 1.1 as an example, the circuit inductance impedance of the photovoltaic power generation system may be calculated as:

$$Z_l^{'} = Z_l \times 1.1 = 117m\Omega$$

Where $Z_l{'}$ is the circuit inductance impedance of the photovoltaic power generation system.

In step 503, the circuit inductance of the photovoltaic power generation system is calculated based on the circuit inductance impedance of the photovoltaic power generation system.

According to Equation 2:

$$Z_l^{'} = 2\pi f L$$

The circuit inductance of the photovoltaic power generation system is calculated. In Equation 2, $f$ is the frequency of the power frequency grid, usually 50 Hz, and $L$ is the circuit inductance of the photovoltaic power generation system.

In step 504, the capacitance of the tuning capacitor is determined according to the design value of the resonant frequency of the photovoltaic power generation system and the circuit inductance of the photovoltaic power generation system.

According to Equation 1:

$$f_0 = \frac{1}{2\pi\sqrt{LC}}$$

The capacitance of the tuning capacitor may be calculated as:

$$C = 68\mu F$$

The tuning capacitor may make the resonant frequency of the photovoltaic power generation system reach the design value, and the difference between the design value and the switching frequency of the inverter of the photovoltaic system is not less than a preset threshold.

In step 505, the photovoltaic system is connected to the AC grid, and the tuning capacitor is connected to the grid connection port of the photovoltaic system according to the determined capacitance.

In step 506, the rated current of the tuning capacitor is determined.

The sum of the reactive currents generated by the power frequency voltage and the harmonic voltage on the tuning capacitor is calculated, and the rated current of the tuning capacitor is determined according to the sum of the reactive currents, and the rated current is greater than the sum of the reactive currents.

The effective value of the reactive current generated by the power frequency voltage on the tuning capacitor is:

$$I_{c1} = 2\pi f C U_1 = 4.7A$$

Where $f$ is the frequency of the power frequency grid, and $U_1$. is the effective value of the power frequency voltage.

To calculate the reactive current generated by the harmonic voltage, it is necessary to measure the effective value of the harmonic voltage. An oscilloscope may be used to test harmonic voltages at the field, and one cycle of the test waveform may be expanded to the entire screen of the oscilloscope. The amplitude measurement range is changed to suit the range. The effective value of the harmonic voltage may be measured with the calculation measurement parameter RMS function of the oscilloscope. After field testing, the effective value of the harmonic voltage is 30V. Then the effective value of the reactive current generated by the harmonic voltage on the tuning capacitor is:

$$I_{c2} = 2\pi f_x C U_x = 34.5A$$

Where $f_x$ is the harmonic voltage frequency with the value same as the switching frequency of the inverter, i.e., 2.7 KHz, and $U_x$ is the effective value of the harmonic voltage. The total reactive current of the tuning capacitor is:

$$I_c = I_{c1} + I_{c2} = 39.2A$$

Based on the above calculation, the rated current of the tuning capacitor may be selected as 55A. The working environment temperature may be selected to be 60 °C.

In step 507, the rated voltage of the tuning capacitor is determined.

The rated voltage of the tuning capacitor is determined according to the line voltage and the phase voltage of the photovoltaic system, and the rated voltage is greater than the larger value of the line voltage and the phase voltage of the photovoltaic system.

The photovoltaic system has a line voltage of 400V and a phase voltage of 230V. Considering the superposition of the harmonic wave and the overvoltage of the system, a tuning capacitor with an effective value 690V of the rated voltage may be selected. Operating temperature range may be -40 ° C ~ 85 ° C, allowing 1.2 times overvoltage for 1min, a peak current of 1900A and an internal resistance of 1mΩ.

Referring to Fig. 3, the tuning capacitor may be disconnected from or connected to the photovoltaic system by a control switch. Hereinafter, the application effect of the method for suppressing a harmonic wave provided by the present invention is verified and measured according to an example in which the design value of the resonance frequency is 1 kHz.

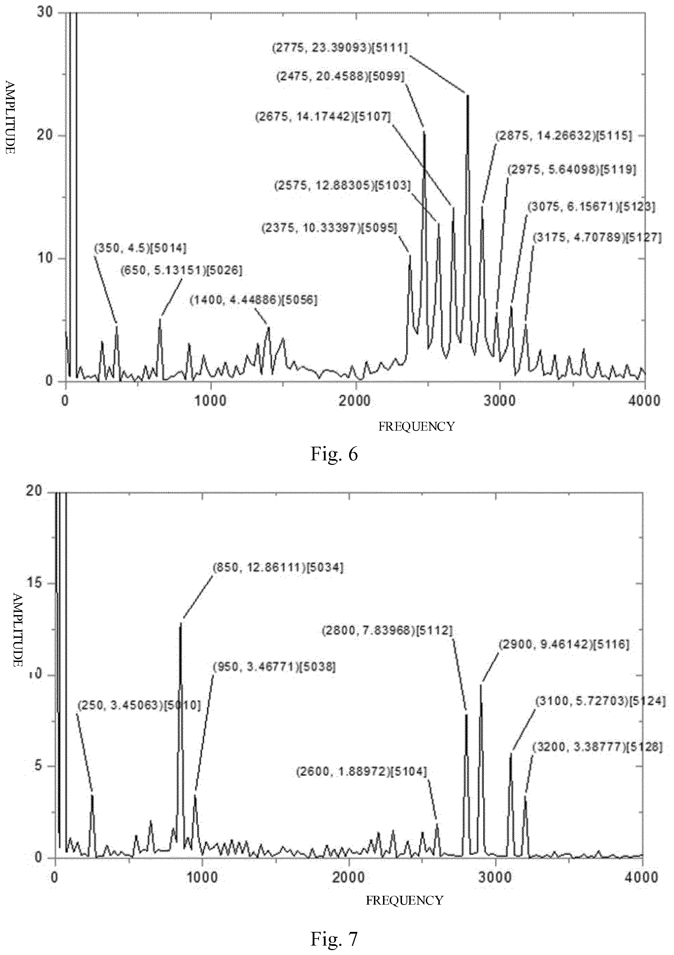

When the tuning capacitor is disconnected from the photovoltaic system, the voltage spectrum profile measured at the 400V port of the grid connection port of the photovoltaic system is shown in Fig. 6. The resonance point is within the frequency range of 2.3k-3.1kHz, which covers the switching frequency of the inverter (2.7k), and the harmonic component of some frequency bands even exceeds 20%.

When the tuning capacitor is connected to the photovoltaic system, the voltage spectrum profile measured at the 400V port of the grid connection port of the photovoltaic system is shown in Fig. 7. After the tuning capacitor is connected, the harmonics in the frequency range of 2.3k-3.1kHz are obviously reduced, and the harmonics in the frequency band around 1kHz are slightly increased.

In the method for suppressing a harmonic wave provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

The following is a device embodiment of the present invention, which may be used to implement the method embodiment of the present invention.

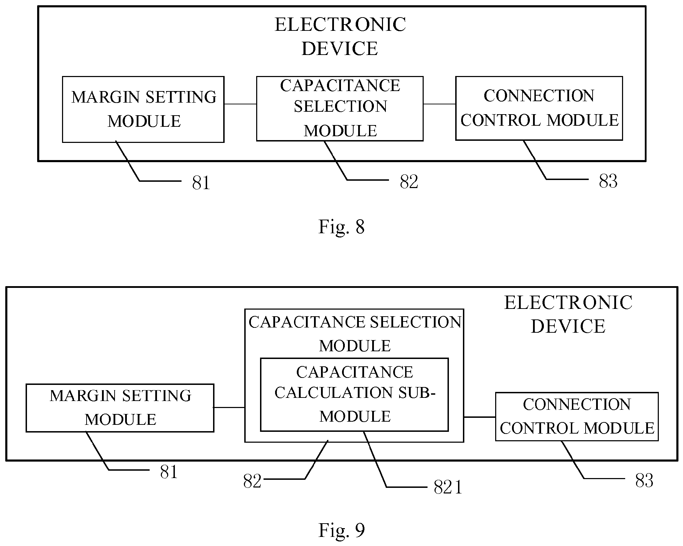

Fig. 8 is a block diagram of an electronic device according to an exemplary embodiment, which may implement some or all of its functions by software, hardware or a combination of both, which is applied in a photovoltaic power generation system. The photovoltaic power generation system includes a photovoltaic system and the AC grid. The photovoltaic system includes a photovoltaic panel and an inverter, and the inverter is used to convert the direct current generated by the photovoltaic panel into alternating current.

The electronic device is used to perform the method for suppressing a harmonic wave described in the embodiment corresponding to Figs. 4-7. As shown in Fig. 8, the electronic device includes a margin setting module 81, a capacitance selection module 82 and a connection control module 83.

The margin setting module 81 is configured to determine a design value of the resonant frequency of the photovoltaic power generation system according to the switching frequency of the inverter, and a difference between the design value and the switching frequency of the inverter is not less than a preset threshold. The capacitance selection module 82 is configured to determine a capacitance of the tuning capacitor according to the design value, and the tuning capacitor causes the resonant frequency of the photovoltaic power generation system to reach the design value.

The connection control module 83 is configured to connect the tuning capacitor to the grid connection port of the photovoltaic system according to the determined capacitance.

As shown in Fig. 9, in one embodiment, the capacitance selection module 82 includes:
a capacitance calculation sub-module 821 configured to determine the capacitance of the tuning capacitor according to the design value and the circuit inductance of the photovoltaic power generation system.

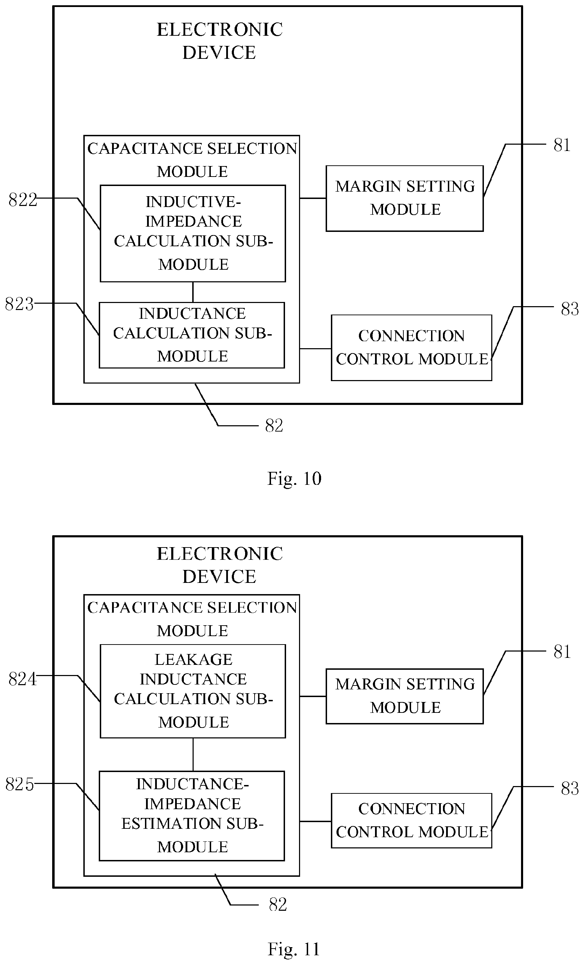

As shown in Fig. 10, in one embodiment, the capacitance selection module 82 includes:

an inductive-impedance calculation sub-module 822 configured to determine a circuit inductance impedance of the photovoltaic power generation system;

and

an inductance calculation sub-module 823 configured to calculate a circuit inductance of the photovoltaic power generation system according to the circuit inductance impedance of the photovoltaic power generation system.

As shown in Fig. 11, in one embodiment, the capacitance selection module 82 includes:

a leakage inductance calculation sub-module 824 configured to determine a leakage inductance impedance of the transformer in a circuit of the photovoltaic power generation system; and

an inductance-impedance estimation sub-module 825 configured to estimate the circuit inductance impedance of the photovoltaic power generation system according to the leakage inductance impedance of the transformer.

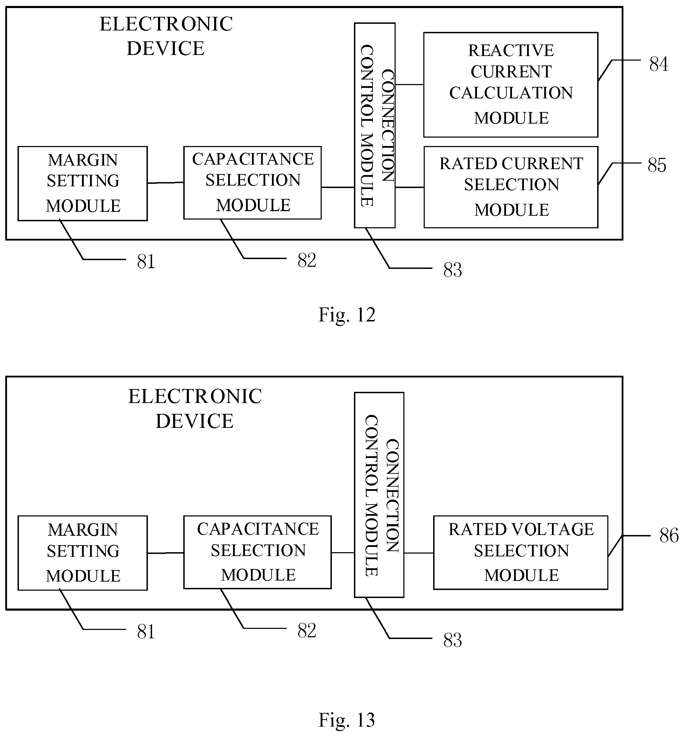

As shown in Fig. 12, in an embodiment, the device further includes:

a reactive current calculation module 84 configured to calculate the sum of the reactive currents generated by the power frequency voltage and the harmonic voltage on the tuning capacitor; and

a rated current selection module 85 configured to determine the rated current of the tuning capacitor according to the sum of the reactive currents, and the rated current is greater than the sum of the reactive currents.

As shown in Fig. 13, in an embodiment, the device further includes:
a rated voltage selection module 86 configured to determine the rated voltage of the tuning capacitor according to the line voltage and the phase voltage of the photovoltaic system, and the rated voltage is greater than a larger value of the line voltage and the phase voltage of the photovoltaic system.

In the electronic device provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

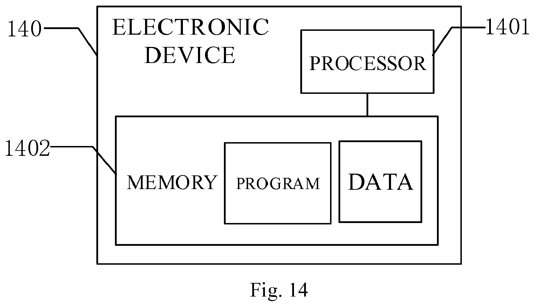

Fig. 14 is a block diagram of an electronic device, part or all of which may be implemented by using software, hardware, or a combination of both, according to an exemplary embodiment, the electronic device being applied in a photovoltaic power generation system, and photovoltaic power generation system includes a photovoltaic system and an alternating current grid, the photovoltaic system includes a photovoltaic panel and an inverter, and the inverter is used to convert a direct current generated by the photovoltaic panel into an alternating current.

The electronic device is used to perform the method for suppressing a harmonic wave described in the embodiments corresponding to Figs. 4-7 described above. As shown in Fig. 14, the electronic device 140 includes:

a processor 1401;

a memory 1402 for storing instructions executable by the processor 1401.

The processor 1401 is configured to:

determine a design value of a resonant frequency of the photovoltaic power generation system according to a switching frequency of the inverter, a difference between the design value and the switching frequency of the inverter being not less than a preset threshold;

determine a capacitance of a tuning capacitor according to the design value, the tuning capacitor causing the resonant frequency of the photovoltaic power generation system to reach the design value; and

connect the tuning capacitor to a grid connection port of the photovoltaic system according to the determined capacitance.

In an embodiment, the processor 1401 is further configured to:
determine the capacitance of the tuning capacitor according to the design value of the resonant frequency of the photovoltaic power generation system and a circuit inductance of the photovoltaic power generation system.

In an embodiment, the processor 1401 is further configured to:

determine a circuit inductance impedance of the photovoltaic power generation system; and

calculate the circuit inductance of the photovoltaic power generation system according to the circuit inductance impedance of the photovoltaic power generation system.

In an embodiment, the processor 1401 is further configured to:

determine a leakage inductance impedance of a transformer in a circuit of the photovoltaic power generation system; and

estimate the circuit inductance impedance of the photovoltaic power generation system according to the leakage inductance impedance of the transformer in a power grid line.

In an embodiment, the processor 1401 is further configured to:

calculate a sum of reactive currents generated by the power frequency voltage and the harmonic voltage on the tuning capacitor; and

determine a rated current of the tuning capacitor according to the sum of the reactive currents, the rated current being greater than the sum of the reactive currents.

In an embodiment, the processor 1401 is further configured to:
determine a rated voltage of the tuning capacitor according to a line voltage and a phase voltage of the photovoltaic system, the rated voltage being greater than a larger value of the line voltage and the phase voltage of the photovoltaic system.

In the electronic device provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

In an exemplary embodiment, there is provided a non-transitory computer readable storage medium including instructions that, when executed in a storage medium, implement the method for suppressing a harmonic wave in the embodiments corresponding to Figs. 4-7. The method includes:

determining a design value of a resonant frequency of the photovoltaic power generation system according to a switching frequency of the inverter, a difference between the design value and the switching frequency of the inverter being not less than a preset threshold;

determining a capacitance of a tuning capacitor according to the design value, the tuning capacitor causing the resonant frequency of the photovoltaic power generation system to reach the design value; and

connecting the tuning capacitor to a grid connection port of the photovoltaic system according to the determined capacitance.

In an embodiment, the method further includes: determining the capacitance of the tuning capacitor according to the design value and a circuit inductance of the photovoltaic power generation system.

In an embodiment, the method includes:

determining a circuit inductance impedance of the photovoltaic power generation system; and

calculating the circuit inductance of the photovoltaic power generation system according to the circuit inductance impedance of the photovoltaic power generation system.

In an embodiment, the method includes:

determining a leakage inductance impedance of a transformer in a circuit of the photovoltaic power generation system; and

estimating the circuit inductance impedance of the photovoltaic power generation system according to the leakage inductance impedance of the transformer.

In an embodiment, the method includes:

calculating a sum of reactive currents generated by the power frequency voltage and the harmonic voltage on the tuning capacitor; and

determining a rated current of the tuning capacitor according to the sum of the reactive currents, the rated current being greater than the sum of the reactive currents.

In an embodiment, the method includes: determining a rated voltage of the tuning capacitor according to a line voltage and a phase voltage of the photovoltaic system, the rated voltage being greater than a larger value of the line voltage and the phase voltage of the photovoltaic system.

In the storage medium provided by the embodiment of the present invention, a tuning capacitor is connected to the grid connection port of the photovoltaic system, to change the original resonant frequency of the photovoltaic system, so that the resonant frequency of the grid is shifted from the harmonic frequency generated by the inverter, i.e., a difference between the resonant frequency of the photovoltaic system and the switching frequency of the inverter is enlarged, thereby suppressing the harmonic resonance introduced by the inverter, reducing the adverse effects of harmonics on various devices on the photovoltaic system line, and improving the safety and stability of the photovoltaic system.

**Claims**

1.  A photovoltaic power generation system, comprising: a photovoltaic system (11), an alternating current grid (12) and a tuning capacitor (13), wherein the photovoltaic system (11) comprises a photovoltaic panel and an inverter, and the inverter is configured to convert a direct current generated by the photovoltaic panel into an alternating current; and the photovoltaic system (11) is connected to the alternating current grid (12), and the tuning capacitor (13) is connected to a grid connection port of the photovoltaic system (11).

2.  The photovoltaic power generation system according to claim 1, further comprising a bleeder resistor (15), wherein the bleeder resistor (15) is connected across the tuning capacitor (13).

3.  The photovoltaic power generation system according to claim 1, further comprising a control switch (14), wherein the control switch (14) is connected between the tuning capacitor (13) and the grid connection port of the photovoltaic system (11).

4.  The photovoltaic power generation system according to claim 1, wherein the photovoltaic system (11) outputs a three-phase alternating current, a number of the tuning capacitors (13) is three, one tuning capacitor (13) is connected between any two phases, and the three tuning capacitors (13) are connected in a star configuration or in a triangle configuration.

5.  A method for suppressing a harmonic wave, applied in a photovoltaic power generation system, the photovoltaic power generation system comprising a photovoltaic system (11) and an alternating current grid (12), the photovoltaic system (11) comprising a photovoltaic panel and an inverter, the inverter being configured to convert a direct current generated by the photovoltaic panel into an alternating current, wherein the method comprises:

determining (401) a design value of a resonant frequency of the photovoltaic power generation system according to a switching frequency of the inverter, a difference between the design value and the switching frequency of the inverter being not less than a preset threshold;
determining (402) a capacitance of a tuning capacitor, wherein the tuning capacitor causes the resonant frequency of the photovoltaic power generation system to reach the design value; and
connecting (403) the tuning capacitor to a grid connection port of the photovoltaic system according to the determined capacitance.

6. The method for suppressing a harmonic wave according to claim 5, wherein determining a capacitance of a tuning capacitor according to the design value comprises:

    determining the capacitance of the tuning capacitor according to the design value and a circuit inductance of the photovoltaic power generation system.

7. The method for suppressing a harmonic wave according to claim 6, further comprising:

    determining a circuit inductance impedance of the photovoltaic power generation system; and
    calculating the circuit inductance of the photovoltaic power generation system according to the circuit inductance impedance of the photovoltaic power generation system.

8. The method for suppressing a harmonic wave according to claim 7, wherein determining a circuit inductance impedance of the photovoltaic power generation system comprises:

    determining (501) a leakage inductance impedance of a transformer in a circuit of the photovoltaic power generation system; and
    estimating (502) the circuit inductance impedance of the photovoltaic power generation system according to the leakage inductance impedance of the transformer.

9. The method for suppressing a harmonic wave according to claim 5, further comprising:

    calculating a sum of reactive currents generated by a power frequency voltage and a harmonic voltage on the tuning capacitor; and
    determining a rated current of the tuning capacitor according to the sum of the reactive currents, the rated current being greater than the sum of the reactive currents.

10. The method for suppressing a harmonic wave according to claim 5, further comprising:

determining a rated voltage of the tuning capacitor according to a line voltage and a phase voltage of the photovoltaic system, the rated voltage being greater than a larger value of the line voltage and the phase voltage of the photovoltaic system.

11. A device for suppressing a harmonic wave, applied in a photovoltaic power generation system, the photovoltaic power generation system comprising a photovoltaic system (11) and an alternating current grid (12), the photovoltaic system (11) comprising a photovoltaic panel and an inverter, the inverter being configured to convert a direct current generated by the photovoltaic panel into an alternating current, wherein the device comprises:

    a margin setting module (81) configured to determine a design value of a resonant frequency of the photovoltaic power generation system according to a switching frequency of the inverter, a difference between the design value and the switching frequency of the inverter being not less than a preset threshold;
    a capacitance selection module (82) configured to determine a capacitance of a tuning capacitor according to the design value, the tuning capacitor causes resonant frequency of the photovoltaic power generation system to reach the design value; and
    a connection control module (83) configured to connect the tuning capacitor to a grid connection port of the photovoltaic system according to the determined capacitance.

12. The device for suppressing a harmonic wave according to claim 11, wherein the capacitance selection module (82) comprises:

    a capacitance calculation sub-module (821) configured to determine the capacitance of the tuning capacitor according to the design value and a circuit inductance of the photovoltaic power generation system;
    an inductive-impedance calculation sub-module (822) configured to determine a circuit inductance impedance of the photovoltaic power generation system; and
    an inductance calculation sub-module (823) configured to calculate the circuit inductance of the photovoltaic power generation system according to the circuit inductance impedance of the photovoltaic power generation system,

or comprises:

    a leakage inductance calculation sub-module (824) configured to determine a leakage inductance impedance of a transformer in a circuit of the photovoltaic power generation system; and an inductance-impedance estimation sub-module (825) configured to estimate the circuit inductance impedance of the photovoltaic power generation system according to the leakage inductance impedance of the transformer.

13. The device for suppressing a harmonic wave according to claim 11, further comprising:

a reactive current calculation module (84) configured to calculate a sum of reactive currents generated by a power frequency voltage and a harmonic voltage on the tuning capacitor; and a rated current selection module (85) configured to determine a rated current of the tuning capacitor according to the sum of the reactive currents, the rated current being greater than the sum of the reactive currents,

or further comprising:

a rated voltage selection module (86) configured to determine a rated voltage of the tuning capacitor according to a line voltage and a phase voltage of the photovoltaic system, the rated voltage being greater than a larger value of the line voltage and the phase voltage of the photovoltaic system.

14. A device for suppressing a harmonic wave, applied in a photovoltaic power generation system, the photovoltaic power generation system comprising a photovoltaic system (12) and an alternating current grid (11), the photovoltaic system (11) comprising a photovoltaic panel and an inverter, the inverter being configured to convert a direct current generated by the photovoltaic panel into an alternating current, wherein the device comprises:

a processor (1401); and a memory (1402) for storing instructions executable by the processor (1401), wherein the processor (1401) is configured to perform the steps of the method for suppressing a harmonic wave of any of claims 5-10.

15. A computer readable storage medium having stored thereon computer instructions, wherein the instructions are executed by a processor to perform the steps of the method for suppressing a harmonic wave of any of claims 5-10.

PHOTOVOLTAIC
SYSTEM

ALTERNATING
CURRENT
GRID

11

12

13

13

13

Fig. 1

Fig. 2

Fig. 3

DETERMINING A DESIGN VALUE OF A RESONANT FREQUENCY OF THE PHOTOVOLTAIC POWER GENERATION SYSTEM ACCORDING TO A SWITCHING FREQUENCY OF THE INVERTER — 401

DETERMINING A CAPACITANCE OF A TUNING CAPACITOR ACCORDING TO THE DESIGN VALUE — 402

CONNECTING THE TUNING CAPACITOR TO A GRID CONNECTION PORT OF THE PHOTOVOLTAIC SYSTEM ACCORDING TO THE DETERMINED CAPACITANCE — 403

Fig. 4

e

DETERMINING A LEAKAGE INDUCTANCE IMPEDANCE OF A TRANSFORMER IN A CIRCUIT OF THE PHOTOVOLTAIC POWER GENERATION SYSTEM — 501

ESTIMATING THE CIRCUIT INDUCTANCE IMPEDANCE OF THE PHOTOVOLTAIC POWER GENERATION SYSTEM ACCORDING TO THE LEAKAGE INDUCTANCE IMPEDANCE OF THE TRANSFORMER IN THE GRID LINE — 502

CALCULATING THE CIRCUIT INDUCTANCE OF THE PHOTOVOLTAIC POWER GENERATION SYSTEM ACCORDING TO THE CIRCUIT INDUCTANCE IMPEDANCE OF THE PHOTOVOLTAIC POWER GENERATION SYSTEM — 503

DETERMINING THE CAPACITANCE OF THE TUNING CAPACITOR ACCORDING TO THE DESIGN VALUE OF THE RESONANT FREQUENCY OF THE PHOTOVOLTAIC POWER GENERATION SYSTEM AND A CIRCUIT INDUCTANCE OF THE PHOTOVOLTAIC POWER GENERATION SYSTEM — 504

CONNECTING THE PHOTOVOLTAIC SYSTEM TO THE ALTERNATING CURRENT GRID, AND CONNECTING THE TUNING CAPACITOR TO A GRID CONNECTION PORT OF THE PHOTOVOLTAIC SYSTEM ACCORDING TO THE DETERMINED CAPACITANCE — 505

DETERMINING A RATED CURRENT OF THE TUNING CAPACITOR — 506

DETERMINING A RATED VOLTAGE OF THE TUNING CAPACITOR — 507

Fig. 5

Fig. 6

Fig. 7

ELECTRONIC
DEVICE

| MARGIN SETTING MODULE | CAPACITANCE SELECTION MODULE | CONNECTION CONTROL MODULE |

81          82          83

Fig. 8

ELECTRONIC
DEVICE

CAPACITANCE SELECTION
MODULE

CAPACITANCE
CALCULATION SUB-
MODULE

MARGIN SETTING
MODULE

CONNECTION
CONTROL MODULE

81          82          821          83

Fig. 9

**ELECTRONIC DEVICE**

CAPACITANCE SELECTION MODULE

822 — INDUCTIVE-IMPEDANCE CALCULATION SUB-MODULE

823 — INDUCTANCE CALCULATION SUB-MODULE

82

MARGIN SETTING MODULE — 81

CONNECTION CONTROL MODULE — 83

Fig. 10

**ELECTRONIC DEVICE**

CAPACITANCE SELECTION MODULE

824 — LEAKAGE INDUCTANCE CALCULATION SUB-MODULE

825 — INDUCTANCE-IMPEDANCE ESTIMATION SUB-MODULE

82

MARGIN SETTING MODULE — 81

CONNECTION CONTROL MODULE — 83

Fig. 11

ELECTRONIC
DEVICE

CONNECTION
CONTROL MODULE

REACTIVE
CURRENT
CALCULATION
MODULE — 84

MARGIN
SETTING
MODULE

CAPACITANCE
SELECTION
MODULE

RATED CURRENT
SELECTION
MODULE — 85

81 82 83

Fig. 12

ELECTRONIC
DEVICE

CONNECTION
CONTROL MODULE

MARGIN
SETTING
MODULE

CAPACITANCE
SELECTION
MODULE

RATED VOLTAGE
SELECTION
MODULE — 86

81 82 83

Fig. 13

140 — ELECTRONIC
DEVICE

PROCESSOR ——1401

1402 —

MEMORY | PROGRAM | DATA

Fig. 14

Europäisches
Patentamt

European
Patent Office

Office européen
des brevets

## EUROPEAN SEARCH REPORT

Application Number

EP 18 19 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 018497 A1 (SIEMENS AG [DE]) 22 October 2009 (2009-10-22) * paragraph [0043] * * figure 4 * | 1 | INV. H02M1/14 H02J3/01 H02J3/38 |
| X | US 5 444 609 A (SWAMY MAHESH M [US] ET AL) 22 August 1995 (1995-08-22) * column 4, line 44 - line 51 * * figure 4 * | 1,2 | ADD. H02J3/00 |
| X | DE 20 2016 100226 U1 (CONDENSATOR DOMINIT DR CHRISTIAN DRESEL GES FÜR LEISTUNGSELEKTRONIK EN) 18 February 2016 (2016-02-18) * paragraphs [0001], [0002] * * figure 7 * | 1,3,5-15 | |
| X | US 2017/117748 A1 (MONDAL SUBRATA K [US]) 27 April 2017 (2017-04-27) * figure 16 * | 1 | |
| X | WO 2011/124223 A2 (DANFOSS DRIVES AS [DK]; KALASCHNIKOW SERGEJ [AT]; ASIMINOAEI LUCIAN [D] 13 October 2011 (2011-10-13) * figures 3a-e * | 1,4 | TECHNICAL FIELDS SEARCHED (IPC) H02M H02J |
| X | US 5 844 791 A (SWAMY MAHESH MYSORE [US]) 1 December 1998 (1998-12-01) * column 5, line 36 - line 50 * * figure 4 * | 1 | |

The present search report has been drawn up for all claims

| Place of search | Date of completion of the search | Examiner |
|---|---|---|
| Munich | 15 March 2019 | Bartal, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 1894

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2019

| Patent document cited in search report | Publication date | Patent family member(s) | Publication date |
|---|---|---|---|
| DE 102008018497 A1 | 22-10-2009 | NONE | |
| US 5444609 A | 22-08-1995 | NONE | |
| DE 202016100226 U1 | 18-02-2016 | DE 202016100226 U1<br>EP 3065247 A1<br>ES 2634668 T3 | 18-02-2016<br>07-09-2016<br>28-09-2017 |
| US 2017117748 A1 | 27-04-2017 | NONE | |
| WO 2011124223 A2 | 13-10-2011 | EP 2556575 A2<br>WO 2011124223 A2 | 13-02-2013<br>13-10-2011 |
| US 5844791 A | 01-12-1998 | US 5844791 A<br>US 6009004 A | 01-12-1998<br>28-12-1999 |

EPO FORM P0459

For more details about this annex : see Official Journal of the European Patent Office, No. 12/82